# EUROPÄISCHE PATENTANMELDUNG

(11) **EP 2 333 266 A2**
(43) Veröffentlichungstag der Anmeldung: **15.06.2011**
(21) Anmeldenummer: 10192474.4
(22) Anmeldetag: 24.11.2010
(51) Int. Cl.: F01P 3/18

(54) **Kühlmodul und Adapterpaar für Modulvereinheitlichung**

(30) Priorität: 02.12.2009 DE 102009056508
(71) Anmelder: Behr GmbH & Co. KG, 70469 Stuttgart (DE)
(72) Erfinder: Keerl, Björn, 74343 Sachsenheim (DE)
(74) Vertreter: Grauel, Andreas

(57) **Zusammenfassung**

Um die Struktur eines Kühlmoduls (100) mit und ohne Hauptkühler zu vereinheitlichen, und damit ein Kühlmodul für Kraftfahrzeuge sowohl mit Verbrennungsmotor als auch mit Elektromotor sowie für Hybridkraftfahrzeuge gleichermaßen einsetzbar zu machen, wird vorgeschlagen, die Trage- und Haltefunktion einer Kühlkomponente, insbesondere des von Luft und Motorflüssigkeit eines Verbrennungsmotors durchströmtes Kühleraggregat (190) durch zwei Adapterteile (121, 122) zu ersetzen.

## Beschreibung

Die Erfindung betrifft ein Kühlmodul für Kraftfahrzeuge sowie ein Adapterpaar mit einem ersten Adapterelement und einem zweiten Adapterelement zur Halterung von Kühl- und Rahmenkomponenten eines Kühlmoduls für Kraftfahrzeuge, ferner ein Montageverfahren dafür nach dem Oberbegriff der jeweils unabhängigen Ansprüche.

Kühlmodule, bei denen mehrere Kühlfunktionen durch eine Mehrzahl von Kühlkomponenten übernommen werden, sind aus der DE 42 44 039 C2 bekannt. Dort ist offenbart, eine Kühlkomponente in Form eines Ladeluftkühlers parallel vor einer von Luft durchströmten Kühlfläche eines Kühleraggregats anzuordnen. In der DE 42 44 039 C2 wird vorgeschlagen, die Bautiefe solcher Kühlmodule zu verkleinern, insbesondere wenn noch ein Ölkühler mit vorgesehen ist.

Aus der DE 10 2005 044 557 A1 ist eine Zarge für ein Kühlmodul eines Kraftfahrzeugs bekannt, die als Träger für von Kühlkomponenten in Form eines Wärmeübertragers und eines Kühlgebläses ausgebildet ist. Die Zarge besitzt seitlich abragende Stützelemente mit denen eine Montage von Anschlüssen für den Wärmeübertrager erheblich vereinfacht ist.

Für Kraftfahrzeuge sind mehrere Antriebskonzepte bekannt. Weit verbreitet sind Antriebe durch Verbrennungskraftmaschinen. Ferner sind batteriebetriebene Elektrofahrzeuge sowie Hybridsysteme bekannt. Bei Hybridsystemen kann neben dem Elektromotor noch ein Verbrennungsmotor verwendet, der nicht unmittelbar dem Antrieb sondern der Stromerzeugung dient, etwa, um größere Reichweiten zu erreichen. Die genannten Antriebskonzepte erfordern Kühlmodule mit unterschiedlichen Kühlkomponenten. Ein einfaches Kühlmodul für ein Kraftfahrzeug mit einem Antrieb durch einen Verbrennungsmotor benötigt einen Hauptkühler, also ein von Luft und Motorkühlflüssigkeit durchströmtes Kühleraggregat sowie ein Lüftermodul. Je nach Ausstattung des Kraftfahrzeugs kann das Kühlmodul um weitere Komponenten, etwa eine Kondensatorkomponente, einen Ladeluftkühler, einen Niedertemperaturkühler und einen Ölkühler erweitert werden. Bei einem Fahrzeug mit Elektroantrieb kann hingegen auf ein von Luft und Motorkühlflüssigkeit durchströmtes Kühleraggregat verzichtet werden. Stattdessen ist eine aufwendige Kühlung für einen Batterieblock notwendig.

Bisher ist ein für alle Antriebskonzepte flexibel anpassbares Kühlmodul nicht bekannt. Stattdessen müssen die verschiedenen Komponenten für jedes Antriebskonzept individuell zusammengestellt werden. Durch die individuelle Zusammenstellung kann die Modulbefestigung und die Steifigkeit des Moduls bislang nur durch entsprechend angepasste Bauteile erfolgen. Die individuelle Anpassung der Modulbefestigung für Kühlmodule für Kraftfahrzeuge mit unterschiedlichen Antriebskonzepten führt zu hohen Entwicklungs- und Lagerkosten, da eine entsprechende Teilevielfalt erforderlich ist.

Eine Aufgabe der Erfindung ist es daher, ein Kühlmodul und ein Adapterpaar für ein Kühlmodul zu vorzuschlagen, mit dem Entwicklungskosten eingespart werden können, und das die Vielfalt der Kühlerkomponenten für das Kühlermodul reduziert und dabei die Funktion der einzelnen Kühlerkomponenten bezüglich Trage-, Halte- und Verbindungsfunktion erhält. Insbesondere ist es eine Aufgabe, ein Verfahren vorzuschlagen, bei dem für Kraftfahrzeuge, die von Verbrennungsmotorantrieb auf einen Antrieb ohne Verbrennungsmotor umgerüstet werden sollen, auch deren Kühlmodul auf einfache Weise umzurüsten ist.

Die Aufgabe wird gelöst durch den kennzeichnenden Teil der jeweiligen unabhängigen Ansprüche. Weitere vorteilhafte Fortbildungen ergeben sich durch die abhängigen Ansprüche.

Das vorgeschlagene Kühlmodul für Kraftfahrzeuge weist eine Mehrzahl von Kühl- und Rahmenkomponenten auf. Das Kühlmodul kann mittels eines Adapterpaars an der Karosserie des Kraftfahrzeugs verbunden sein, wobei eine Entkopplung durch Verbindungselemente etwa aus einem Elastomer oder in Form von Gummitüllen, die zwischen der Karosserie und dem Adapter an den Verbindungspunkten angeordnet sind, erfolgen kann. Mindestens eine Kühl- oder Rahmenkomponente ist vor oder hinter dem Adapterpaar spielfrei befestigt. Zwischen zwei seitlich am Kühlmodul anordbaren Adapterelementen des Adapterpaars ist ein Freiraum geschaffen, etwa, wenn auf ein von Luft und Motorflüssigkeit durchströmtes Kühleraggregat verzichtet wird.

Durch das vorgeschlagene Adapterpaar mit einem ersten Adapterelement und einem zweiten Adapterelement zur Halterung von Kühl- und Rahmenkomponenten eines Kühlmoduls für Kraftfahrzeuge, ist das Kühlmodul an einer Karosserie des Kraftfahrzeugs zu befestigen. Zwischen den beiden Adapterelementen kann ein Freiraum gelassen sein oder alternativ eine Kühlungskomponente, insbesondere ein von Luft und Motorflüssigkeit eines Verbrennungsmotors durchströmtes Kühleraggregat, mittels des Adapterpaars halterbar und an diesem fixierbar sein. Das Adapterpaar weist Halterungselemente auf, mittels der eine weitere Kühlkomponente und/oder eine Rahmenkomponente unmittelbar vor und/oder hinter dem Adapterpaar halterbar ist.

Die Aufgabe wird ferner gelöst durch ein Verfahren zum Umrüsten von Kühlmodulen durch Demontage eines von Luft und Motorflüssigkeit durchströmten Kühleraggregats aus dem Kühlmodul und Montage eines Adapterpaares in den durch die Demontage freigewordenen Bauraum.

Sofern Kraftfahrzeuge über einen Elektroantrieb angetrieben sind, übernimmt das vorgeschlagene Adapterpaar die Lagerfunktion und die Befestigungsaufgaben des in diesem Fall fortgelassenen, von Luft und Motorflüssigkeit eines Verbrennungsmotors durchströmten, Kühleraggregats. Durch die Erfindung wird die Variantenvielfalt von Kühlmodulkomponenten reduziert und entsprechende Entwicklungskosten eingespart. Ein weiterer Vorteil der Erfindung kann dadurch erreicht werden, dass die Kühlmodulkomponenten im Baukastenprinzip verwendet werden, also bezüglich ihrer Befestigungsmittel Gleichteile sein können.

Um die benötigte Steifigkeit des Kühlmoduls zu erreichen, kann die Befestigung durch seitlich vorstehende Zargen an der mindestens einen Kühl- oder Rahmenkomponente vor oder hinter dem Adapterpaar und Zargenaufnahmen an jedem Adapterelement vorgesehen sein, die die Zargen von unten umgreifen. Die Befestigung kann auch durch andere Mittel, etwa durch Querverbindungselemente an den Adapterelementen quer zur Fahrzeuglängsrichtung oder über eine andere spielfrei gestaltete Verbindung der Adapterelemente mit einer Rahmenkomponente, etwa einem Kondensatorrahmen zur Halterung der Kondensatorkomponente vorgesehen sein.

In einer Ausführung besteht zwischen den Zargen und Zargenaufnahmen in einem Montagezustand eine Spielfreiheit, insbesondere in einer Querrichtung zur Luftströmungsrichtung (Y-Richtung). Dies vereinfacht die Montage des Kühlmoduls, da die zargentragende Komponente des Kühlmoduls insbesondere in Richtung des Spiels verkippt werden kann.

In einer weiteren Ausführung wird vorgeschlagen, die Befestigung in einem Betriebszustand durch Fixiermittel, insbesondere durch eine Verschraubung durch die Zargen und Zargenaufnahmen vorzusehen, wodurch die oben genannte Spielfreiheit aufgehoben ist.

Grundsätzlich kann die an dem Adapterpaar befestigbare Kühl- oder Rahmenkomponente aus der hier nicht abschließend genannten Gruppe Lüftermodul, Lüfterzarge, Lüftermodulrahmen, Kondensatormodul, Kondensatorrahmen, Ladeluft-Kühlermodul, Ladeluft-Kühlerrahmen, Niedertemperatur-Kühlermodul, Niedertemperatur-Kühlermodulrahmen, Ölkühlermodul und Ölkühler-Modulrahmen ausgewählt sein.

Weist das Kraftfahrzeug einen Verbrennungsmotor auf, kann zwischen den zwei seitlich am Kühlmodul anordbaren Adapterelementen des Adapterpaars ein von Luft und Motorflüssigkeit des Verbrennungsmotors durchströmtes Kühleraggregat fest gehaltert sein. In diesem Fall ist das Adapterpaar Teil des Kühleraggregats und kann entsprechend von Fluid durchströmt werden. Weist das Kraftfahrzeug einen Elektroantrieb auf, so kann zwischen den zwei seitlich am Kühlmodul anordbaren Adapterelementen des Adapterpaars ein Freiraum gelassen werden. Die Anpassung des Kühlmoduls an die genannten Konzepte kann also im Wesentlichen lediglich durch einen Einbau oder Fortlassen des Kühleraggregats erfolgen. Das Adapterpaar übernimmt zumindest alle Lagerungs-, Befestigungs- und/oder Tragefunktionen des jeweils fortgelassenen Moduls.

In einer weiteren Ausführung wird vorgeschlagen, dass jedes Adapterelement Fixiermittel zur Befestigung an der Fahrzeugkarosserie, insbesondere Schraub- oder Zapfenverbindungen an der Ober- und/oder Unterseite, aufweist. Insbesondere kann die Befestigung an der Fahrzeugkarosserie allein über diese Fixiermittel erfolgen. Alternativ wird vorgeschlagen, die Fixierung an anderen Stellen der Kühlmodulkomponenten zu ergänzen.

In einer Ausführung ist jedes Adapterelement als Kunststoffspritzteil herstellbar. Vorzugsweise kann ein Adapterelement noch durch bevorzugt innenliegende Rippen, Verstrebungen oder eine fachwerkartige Gitter- oder Wabenstruktur versteift werden.

Die Erfindung ist anhand von Ausführungsbeispielen in den Zeichnungen dargestellt und im Folgenden näher erläutert. Es zeigen:
**Fig. 1** eine perspektivische Ansicht eines Kühlmoduls;
**Fig. 2** das Kühlmodul in Fig. 1 in einer weiteren perspektivischen Ansicht;
**Fig. 3** eine Explosionsdarstellung des Kühlmoduls aus der in Fig. 1 gezeigten Perspektive mit einem Freiraum zwischen Adapterelementen;
**Fig. 4** eine Explosionsdarstellung des Kühlmoduls aus der in Fig. 2 gezeigten Perspektive mit einem Freiraum zwischen Adapterelementen;
**Fig. 5** eine Explosionsdarstellung des Kühlmoduls aus der in Fig. 1 gezeigten Perspektive mit einem Kühleraggregat mit zwei alternativen fluiddurchströmbaren Adapterelementen;
**Fig. 6** eine Explosionsdarstellung des Kühlmoduls aus der in Fig. 2 gezeigten Perspektive mit einem Kühleraggregat gemäß Fig. 5;
**Fig. 7** das Adapterpaar wie in Fig. 3 und 4 gezeigt;
**Fig. 8** das fluiddurchströmbare Adapterpaar mit Kühleraggregat wie in Fig. 5 und 6 gezeigt;
**Fig. 9** eine Lüfterkomponente, befestig an dem Adapterpaar;
**Fig. 10** eine Detaildarstellung von Fig. 9 mit näher gezeigten Befestigungsmitteln;
**Fig. 11** ein weiteres Adapterpaar in vier perspektivischen Ansichten mit innenliegenden Rippen.

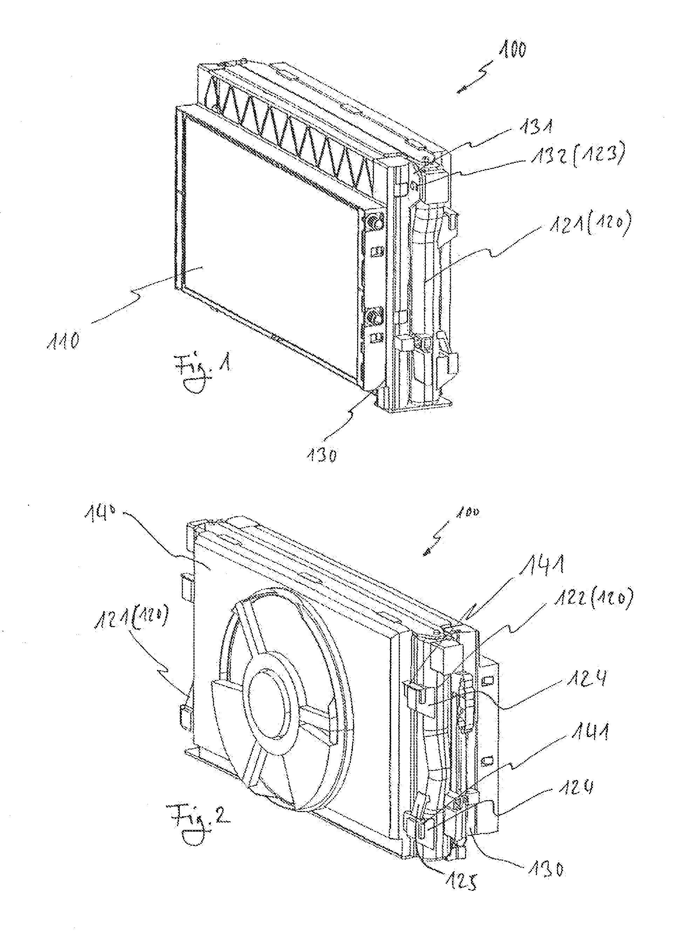

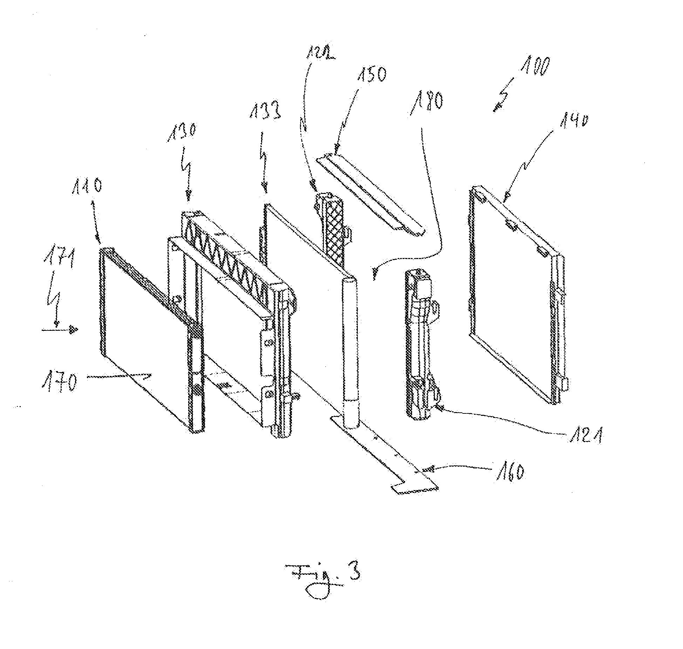

Ein in Fig. 1 perspektivisch von vorn und in Fig. 2 von hinten dargestelltes Kühlmodul 100 für ein hier nicht gezeigtes Kraftfahrzeug besteht aus einer Mehrzahl von Kühl- und Rahmenkomponenten und zeigt insbesondere Adapterelemente 121, 122 eines Adapterpaars 120. Die Begriffe vorn, hinten, oben, unten, seitlich, mittig, links und rechts beziehen sich auf die Blickrichtung zu einem hier nicht dargestellten Kraftfahrzeug, in das das Kühlmodul eingebaut wird. In Fig. 1 ist ein Niedertemperaturkühler 110 gezeigt, der vor einem Kondensatorrahmen 130 befestigt ist. Der Kondensatorrahmen 130 trägt neben dem Niedertemperaturkühler noch ein in Fig. 3 gezeigtes Kondensatormodul. Der Kondensatorrahmen 130 ist links und rechts mit je einem seitlich abstehenden Flansch 131 versehen, welcher jeweils eine Öffnung 132 aufweist. Der Kondensatorrahmen 130 ist im unteren Bereich mit dem Adapterpaar oder dem Kühleraggregat durch eine hier nicht näher gezeigte Clip-Verbindung gehaltert. Im oberen Bereich wird zur Verbindung ein Bolzen 123 mit Bolzennut mit den Adapterelementen 121, 122 und verbunden und über einen hier nicht dargestellten Sicherungsclip gesichert.

In Fig. 2 ist insbesondere eine Lüfterzarge 140 zum Tragen eines Lüfters mit Elektromotor (hier nicht dargestellt) gezeigt. Die Lüfterzarge besitzt links und rechts jeweils zwei seitlich abstehende rechteckförmige Zargen 141. Diese Zargen 141 sind in entsprechende nach oben geöffnete Zargenaufnahmen 124 der Adapterelemente 121, 122 von oben eingelassen. Zur Verbesserung der Stabilität der Zargenverbindung sind die Zargenaufnahmen 124 nach unten verstärkt, indem sich der unter der Zarge 141 befindliche Teil zum Adapterelement 121, 122 hin verdickt. Ferner weisen die unteren Zargenaufnahmen noch je ein Rastelement in Form einer Schnapplasche 125 auf, die ein Herausspringen der unteren Zargen aus der Zargenaufnahme vermeidet. Jede Schnapplasche 125 ist so angeordnet, dass eine Unterkante in eingerastetem oder eingeschnappten Zustand über der Oberseite der Zarge liegt. Die Schnapplaschen können sich elastisch verformen, indem sie sich bei Montage einer Kühlerkomponente an die Adapterelemente 121, 122 zu diesen hin bewegen lassen und bei erfolgter Montage zurückspringen.

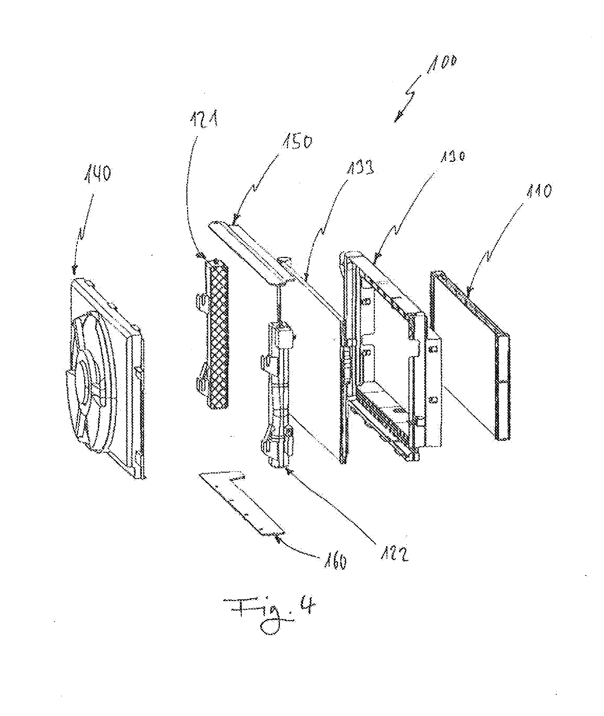

Fig. 3 und 4 zeigen dass Kühlmodul 100 perspektivisch von vorn (Fig. 3) und von hinten (Fig. 4). Dargestellt sind der Niedertemperaturkühler 110, der Kondensatorrahmen 130, ein Kondensatormodul 133, ein optional montierbares oberes Luftleitblech 150 für die Luftführung, ein unteres Befestigungsblech 160, die beiden Adapterelemente 121, 122 und die Lüfterzarge 140, die der besseren Übersicht halber ohne Öffnung gezeigt ist. In die Lufteintrittsebene 170 strömt Luft in Richtung des Pfeils 171 ein. Hervorzuheben ist ein Freiraum 180 zwischen den beiden Adapterelementen 121, 122, der verbleibt, sofern -wie im dargestellten Fall- kein Kühleraggregat für Verbrennungsmotoren verwendet wird. Die in Fig. 3 und 4 gezeigte Adapterpaar ist aufgrund der innenliegenden Gitterstruktur, die der Versteifung dient, nicht von Fluid durchströmbar, und eignet sich somit nicht zur Halterung oder dem Anschluss eines Kühleraggregats sondern kann stattdessen alle Halte-, Trage- und Verbindungsfunktionen eines solchen Aggregates übernehmen ohne die Kühlfunktion zu ersetzen.

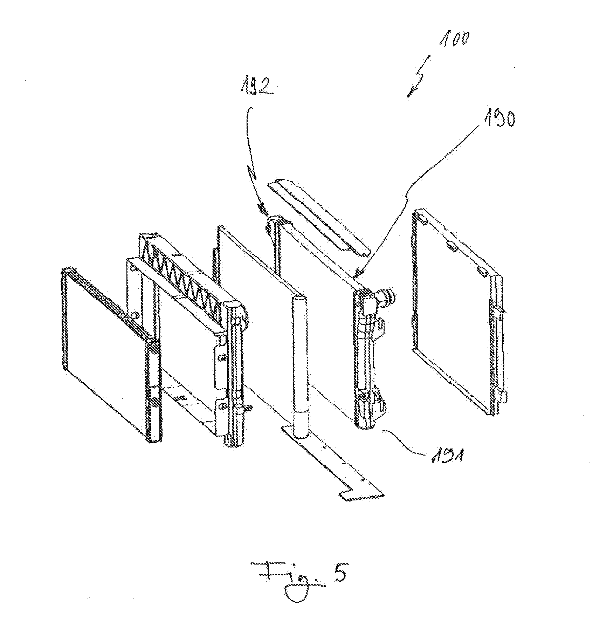

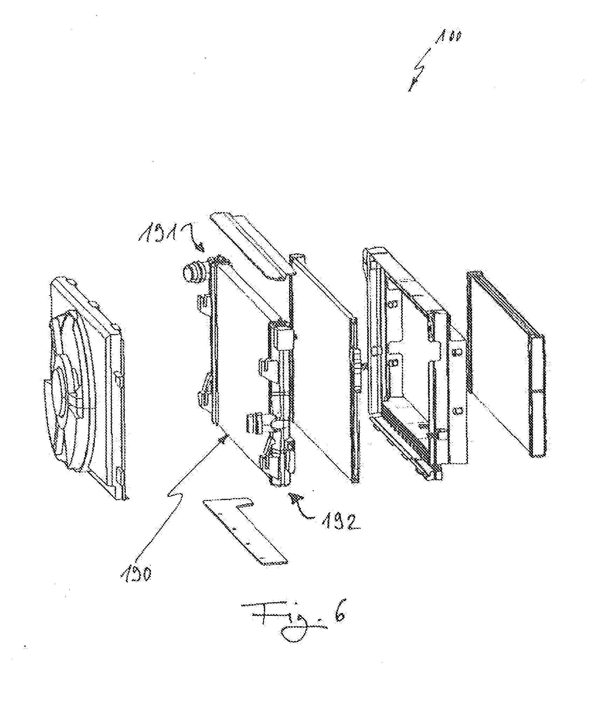

In Fig. 5 und 6 ist im Unterschied zu Fig. 3 und 4 eine weitere Kühlkomponente in Form eines von Luft und Motorflüssigkeit eines Verbrennungsmotors durchströmtes Kühleraggregates 190 gezeigt, wie es für die Kühlung von Verbrennungsmotoren erforderlich ist. Das Kühleraggregat 190 besitzt in diesem Fall zwei Adapterelemente in Form von fluidführbaren Kästen 191, 192 aus Kunststoff, die mit einem hier nicht näher gezeigten so genannten Netz (ein gelötetes Aluminiumbauteil, bestehend aus Rohren, Rippen, Böden und Seitenteilen) des Kühleraggregates 190 verbunden sind. Wahlweise können diese Adapterelemente 191, 192 verwendet werden, um entweder ein von Luft und Motorflüssigkeit eines Verbrennungsmotors durchströmtes Kühleraggregat, zu haltern oder einen Freiraum zu schaffen und alle Halte-, Trage- und Verbindungsfunktionen des Kühleraggregates zu übernehmen bzw. zu ersetzen.

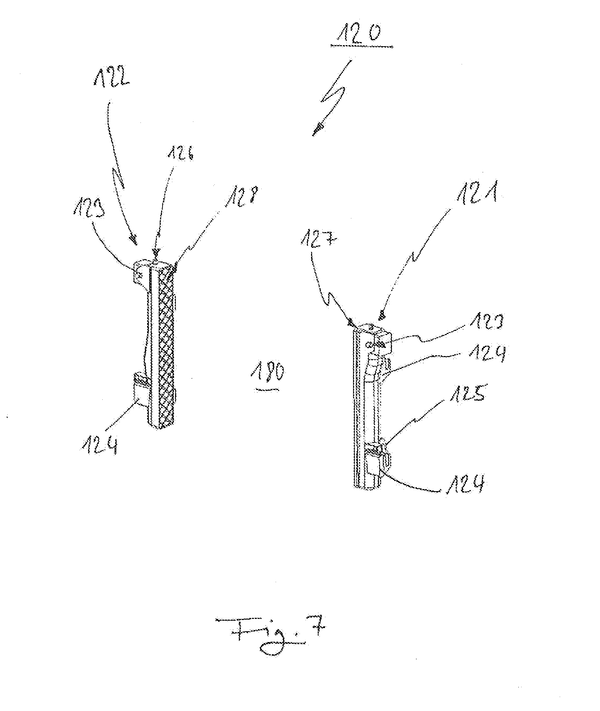

Fig. 7 zeigt nochmals die Adapterelemente 121, 122, die ungeeignet sind, an ein Kühleraggregat angeschlossen zu werden. Gut zu erkennen sind hier an der Oberseite der Adapterelemente angeordnete Steckzapfen 126, die eine Steckverbindung mit weiteren Kühlkomponenten, etwa mit dem oberen Luftleitblech ermöglichen. Gezeigt ist ferner die innenliegende Versteifung eines Adapterelements durch eine Gitterstruktur 128.

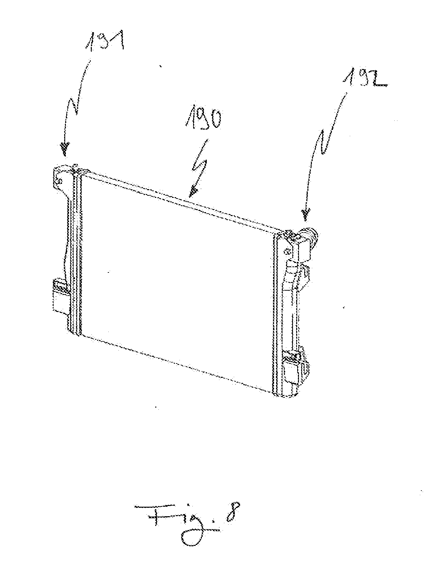

Fig. 8 zeigt nochmals ein Kühleraggregat 190 mit den Adapterelementen 191, 192. Die Adapterelemente sind jeweils mit einem nach innen auskragenden umlaufenden Bund 127 aus Aluminium umfasst.

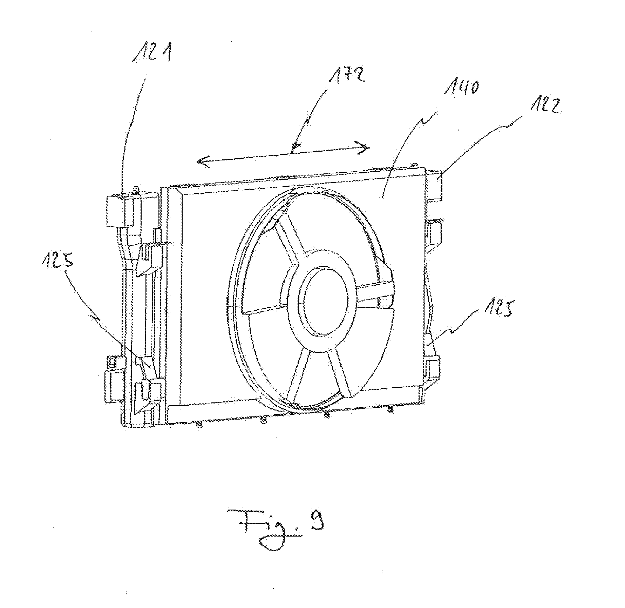

Fig. 9 zeigt die Lüfterzarge 140 vormontiert mit den zwei Adapterelementen 121, 122. In diesem Zustand ist es noch möglich, dass sich die Lüfterzarge nach links und rechts also in Y-Richtung 172 verschieben lässt. Dies ist für eine Montage durchaus gewünscht, ist jedoch in einem Betriebszustand zu vermeiden. Hierfür ist eine entsprechende nachträgliche Fixierung durch Fixierelemente erforderlich.

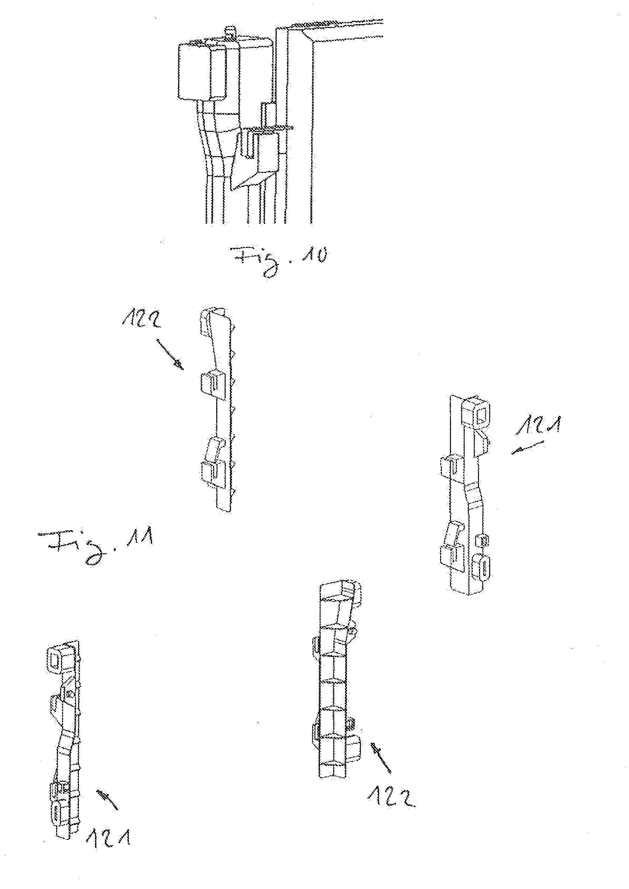

Fig. 10 zeigt schematisch eine mögliche Fixierung durch eine nicht gezeigte Schraube, die in eine durch ein Kreuz 129 angedeutete Bohrung eingeschraubt wird. Der Schraubenkopf kann dabei die Zargenaufnahme an die Zarge drücken und dort spielfrei fixieren.

Fig. 11 zeigt ein weiteres Adapterpaar 120 in den beiden oberen Ansichten von vorn und den beiden unteren Ansichten von hinten. Es versteht sich, dass auch dieses Adapterpaar nicht zur Verwendung mit einem Kühleraggregates geeignet ist, dafür aber eine materialsparende Möglichkeit schafft, das Kühleraggregat fortzulassen und dessen Trage-, Halte- und Verbindungsfunktion innerhalb eines Kühlmoduls zu übernehmen. Die zwei Seitenwände des Adapterpaares sind L-förmig miteinander verbunden und durch innenliegende Rippen versteift.

## Patentansprüche

1. Kühlmodul (100) für Kraftfahrzeuge, aufweisend eine Mehrzahl von Kühl- und Rahmenkomponenten, **dadurch gekennzeichnet, dass** mindestens eine Kühl- oder Rahmenkomponente ( 130, 140) vor oder hinter einem Adapterpaar (120) spielfrei befestigt ist; und zwischen zwei seitlich am Kühlmodul (100) anordbaren Adapterelementen (121, 122) des Adapterpaars (120) oder ein Freiraum (180) gelassen ist.

2. Kühlmodul (100) nach Anspruch 1, wobei die Befestigung durch seitlich vorstehende Zargen (141) an der mindestens einen Kühl- oder Rahmenkomponente (140) vor oder hinter dem Adapterpaar (120) und Zargenaufnahmen (124) an jedem Adapterelement (121,122) vorgesehen ist, die die Zargen von unten umgreifen.

3. Kühlmodul (100) nach Anspruch 2, wobei zwischen den Zargen (141) und Zargenaufnahmen (124) in einem Montagezustand eine Spielfreiheit insbesondere in einer Querrichtung (172) zur Luftströmungsrichtung (171) besteht.

4. Kühlmodul (100) nach Anspruch 2 oder 3, wobei die Befestigung in einem Betriebszustand durch Fixiermittel, insbesondere durch eine Verschraubung durch die Zargen und Zargenaufnahmen spielfrei vorgesehen ist.

5. Kühlmodul (100) nach einem der vorgenannten Ansprüche, wobei die mindestens eine Kühl- oder Rahmenkomponente ausgewählt ist aus der Gruppe Lüftermodul, Lüfterzarge (140), Lüftermodulrahmen, Kondensatormodul (133), Kondensatorrahmen (130), Ladeluft-Kühlermodul, Ladeluft-Kühlerrahmen, Niedertemperatur-Kühlermodul (110), Niedertemperatur-Kühlermodulrahmen, Ölkühlermodul, Ölkühler-Modulrahmen.

6. Kraftfahrzeug, aufweisend ein Kühlmodul (100) nach einem der Ansprüche 1 bis 5 und einen Verbrennungsmotor, wobei zwischen den zwei seitlich am Kühlmodul anordbaren Adapterelementen (121, 122) des Adapterpaars (120) ein von Luft und Motorflüssigkeit des Verbrennungsmotors durchströmtes Kühleraggregat (190) fest gehaltert ist.

7. Elektrokraftfahrzeug, aufweisend ein Kühlmodul (100) nach einem der Ansprüche 1 bis 5, wobei zwischen den zwei seitlich am Kühlmodul anordbaren Adapterelementen (121, 122) des Adapterpaars (120) ein Freiraum (180) gelassen ist.

8. Adapterpaar (120) mit einem ersten Adapterelement (121) und einem zweiten Adapterelement (122) zur Halterung von Kühl- und Rahmenkomponenten (130, 140) eines Kühlmoduls (100) für Kraftfahrzeuge, **dadurch gekennzeichnet, dass** zwischen beiden Adapterelementen ein Freiraum (180) gelassen werden kann und das Adapterpaar Halterungselemente (123, 124) aufweist und mittels der Halterungselemente (123, 124) eine weitere Kühlkomponente und/oder eine Rahmenkomponente unmittelbar vor und/oder hinter dem Adapterpaar halterbar ist.

9. Adapterpaar (120) nach Anspruch 8, wobei jedes Adapterelement Fixiermittel zur Befestigung an der Fahrzeugkarosserie, insbesondere Schraub- oder Zapfenverbindungen an der Ober- und/oder Unterseite, aufweist.

10. Adapterpaar (120) nach Anspruch 8 oder 9, wobei jedes Adapterelement als Kunststoffspritzteil herstellbar ist.

11. Adapterpaar (120) nach einem der vorgenannten Ansprüche, wobei das Adapterpaar zur Versteifung innenliegende Stege, Rippen oder eine Gitterstruktur aufweist.

12. Verfahren zum Umrüsten von Kühlmodulen (100), aufweisend die Schritte:
- Demontage eines von Luft und Motorflüssigkeit durchströmten Kühleraggregats (190) aus dem Kühlmodul;
- Montage eines Adapterpaares (120) nach einem der vorstehenden Ansprüche in den durch die Demontage freigewordenen Bauraum.
